# EUROPEAN PATENT SPECIFICATION

(11) **EP 3 355 380 B1**
(45) Date of publication and mention of the grant of the patent: **19.06.2019**
(21) Application number: 17153287.2
(22) Date of filing: 26.01.2017
(51) Int. Cl.: H01M 2/10, H01M 10/6567, H01M 10/613

(54) **BATTERY HOUSING WITH ABSORBENT AND INSULATOR**
BATTERIEGEHÄUSE MIT SAUGFÄHIGEN UND ISOLIERENDEN SCHICHTEN.
HABITACLE DE BATTERIE AYANT DES COUCHES ABSORBANTES ET ISOLANTES.

(43) Date of publication of application: 01.08.2018
(73) Proprietor: Samsung SDI Co., Ltd., Giheung-gu Yongin-si, Gyeonggi-do 17084 (KR)
(72) Inventor: WÜNSCHE, Ralph, 8010 Graz (AT); TRATHNIGG, Thomas, 8010 Graz (AT); POSCHARNIG, Guido, 8046 Stattegg (AT); LUIDOLD, Wolfgang, 8953 Donnersbach (AT)
(74) Representative: Gulde & Partner

(56) References cited:
- WO-A1-2009/020805
- WO-A1-2012/076808
- US-A- 5 817 434
- US-A1- 2014 220 405

## Description

### Field of the Invention

The present invention relates to a battery housing of a battery module including one or more battery cells or a battery housing of a battery system that includes one or more battery modules. Moreover, the present invention relates to a vehicle including a rechargeable battery, which includes the battery housing.

### Technological Background

A rechargeable or secondary battery differs from a primary battery in that it can be repeatedly charged and discharged, while the latter provides only irreversible conversion of chemical energy to electrical energy. Low-capacity rechargeable batteries are used as power supplies for small electronic devices, such as cellular phones, notebook computers, and camcorders, while high-capacity rechargeable batteries are used as power supplies for hybrid vehicles and the like. Rechargeable batteries are disclosed e.g. in WO 2012/076808 A1, US 5,817,434 A and US 2014/0220405 A1.

In general, rechargeable batteries include an electrode assembly including a positive electrode, a negative electrode, and a separator interposed between the positive and negative electrodes, a case receiving the electrode assembly, and an electrode terminal electrically connected to the electrode assembly. An electrolyte solution is injected into the case in order to enable charging and discharging of the battery via an electrochemical reaction of the positive electrode, the negative electrode, and the electrolyte solution. The shape of the case, e.g., cylindrical or rectangular, depends on the battery's intended purpose. Rechargeable batteries may be used as a battery module formed of a plurality of unit battery cells coupled in series and/or in parallel so as to provide high energy density, e.g., for a motor driving of a hybrid vehicle. That is, the battery module is formed by interconnecting the electrode terminals of the plurality of unit battery cells depending on a required amount of power and in order to realize a high-power rechargeable battery, e.g., for an electric vehicle.

Battery modules can be constructed either in a block design or in a modular design. In block designs each battery is coupled to a common current collector structure and a common battery management system, and the unit thereof is arranged in a housing. In modular designs, a plurality of battery cells are connected to form submodules and several submodules are connected to form a battery module. The battery management functions can then be at least partially realized on either a module or submodule level, and thus interchangeability can be improved. One or more battery modules are mechanically and electrically integrated, equipped with a thermal management system, and set up for communication with one or more electrical consumption devices in order to form a battery system.

To provide thermal control of a battery system, a thermal management system is required to safely use the at least one battery module by efficiently emitting, discharging, and/or dissipating heat generated from its rechargeable batteries. If the heat emission/discharge/dissipation is not sufficiently performed, temperature deviations occur between respective battery cells, such that the at least one battery module cannot generate a desired amount of power. In addition, an increase of the internal temperature can lead to abnormal reactions occurring therein, and thus charging and discharging performance of the rechargeable battery deteriorates and the life-span of the rechargeable battery is shortened. Thus, cooling devices for effectively emitting/discharging/dissipating heat from the cells are required. Cooling devices often use cooling liquids like a mixture of water and glycol. In case leakage occurs in the cooling device, cooling liquid may flow out of the cooling device and into the battery housing. As a result, the risk arises that the cooling liquid short-circuits live, i.e., voltage-carrying, battery parts. In particular, at voltages of e.g., 400 V, which are provided by the battery, hydrolysis of the cooling liquid may occur such that conductive salts are built up, which may short-circuit live parts of the battery.

It is thus an object of the present invention to overcome or reduce at least some of the drawbacks of the prior art and to provide a battery system with improved operational safety.

### Summary of the Invention

One or more of the drawbacks of the prior art could be avoided or at least reduced by means of the present invention.

An exemplary embodiment of the present invention provides a battery housing as defined in claim 1.

In particular, the above-mentioned battery housing comprises an absorbent layer that is arranged inside the battery housing on the bottom, and an insulation film that is arranged on the absorbent layer, wherein the insulation film is sectionwise affixed to the absorbent layer and a region between two affixed sections provides for a fluid-permeable passage between the insulation film and the absorbent layer.

Further aspects of the present invention will be apparent from the dependent claims, the attached drawings, and/or the following description, in which advantageous embodiments and their associated advantages are discussed. These various individual advantageous embodiments can be combined in any configuration.

According to a first possible embodiment, the insulation film may comprise grooves opening towards the absorbent layer. The grooves form conduits or channels, through which the cooling liquid can flow. As the grooves open towards the absorbent layer, cooling liquid is effectively transported to and distributed over the absorbent layer, such that the cooling liquid can be supplied to the complete absorbent layer. Thereby, the cooling liquid is effectively transported away from any live part of the battery.

At least a section of the cooling device, for example a cooling pipe can extend through the battery housing. Alternatively or additionally, a heat exchange member of the cooling device may be arranged in the battery housing, wherein a cooling liquid path may extend through the heat exchange member.

In particular, during operation of the battery, the bottom can be provided by an inner side of the lower part, for example the lowest side, e.g., a bottom plate, of the battery housing. In the direction of gravity, the absorbent layer can be on top of the bottom and the insulation film can be on top of the absorbent layer. The absorbent layer may be in direct contact with the bottom and the insulation film may be in direct contact with the absorbent layer. The bottom may be arranged opposite an opening of the battery housing that can be closed by a cap.

Hence, the grooves may open downwards.

A cross-section of the insulation film perpendicular to the longitudinal direction of the grooves may have a zigzag shape. Due to the zigzag-shaped cross-section, the grooves can be formed easily at a low cost, for example by folding or by thermo-forming the insulation film. Additionally, the zigzag-shaped cross-section provides further grooves that open away from the absorbent layer. These grooves can open upwards and easily receive the cooling liquid leaked from the cooling device and can guide the cooling liquid to the absorbent layer and away from the live parts. For example, the live parts may be terminals and/or housings of battery cells.

The insulation film may be a member or foil made of a thermoplastic material. It can be preformed before mounting it to the bottom and the absorbent layer. Alternatively or additionally, the insulation film can be formed by deep-drawing it onto the absorbent layer. This reduces costs and installation space required for the insulation film, and in addition, better separates the absorbent layer from live parts of the battery due to excellent adaptation of the form of the insulation film.

The battery housing may comprise a stiffening element on the bottom in order to improve the mechanical stability of the battery housing. The stiffening element may protrude from the bottom, for example against the direction of gravity in case the battery with the battery housing is in use. For example, the stiffening element is a stiffening rib that may be formed straight along its longitudinal direction. Live parts of the battery, for example the housing of a battery cell of the battery can be arranged on the stiffening element. Hence, the stiffening element can keep the battery cell at a distance from the absorbent layer, and the insulation layer, in addition to this distance, isolates the absorbent layer from the battery cell.

The stiffening element may be formed with a continuous opening. The stiffening element may at least partly be formed along the longitudinal direction and the continuous opening may extend perpendicular to the longitudinal direction. Through the continuous opening, cooling liquid can easily flow from one side of the stiffening element to the other side of the stiffening element without flowing over the stiffening element and, thereby, approaching live parts of the battery, which would increase the risk of contact of these live parts with the cooling liquid. Thus, the continuous opening further reduces the risk of the cooling liquid contacting live parts of the battery.

The continuous opening may be connected to at least one of the grooves in a fluid-conductive manner, such that the cooling fluid can easily flow from at least one of the grooves to the continuous opening and vice versa, thereby even better distributing the leaked cooling liquid.

The insulation film may cover the stiffening element, in particular, without blocking the continuous opening, such that a continuous flow conduit extends through at least one of the grooves and the continuous opening, thereby allowing the leaked cooling liquid to flow freely from one side of the stiffening element to the other side of the stiffening element, such that the cooling liquid can be distributed effectively.

A clear space may be present between the opening and the absorbent layer. Hence, leaked cooling liquid can easily flow from the opening to the absorbent layer and vice versa.

The battery housing may comprise at least two stiffening elements, wherein the absorbent layer is arranged between the two stiffening elements. Both of the stiffening elements may protrude from the bottom, for example against the direction of gravity in case the battery with the battery housing is in use. For example, the stiffening elements are stiffening ribs that may be formed straight along their longitudinal direction. The stiffening elements may extend parallel or at an angle of between 0 and 90 degrees to each other. Hence, between the stiffening elements, the bottom may form a retention pond or depression for receiving leaked cooling liquid. In this retention pond or depression, the leaked cooling liquid can gather due to gravity and can easily be absorbed.

The battery housing may comprise at least two insulation films, wherein one of the insulation films covers one of the stiffening elements and the other one of the insulation films covers the other one of the stiffening elements, wherein a section of the absorbent layer is uncovered by the insulation films. In particular, the battery housing may comprise a plurality of insulation films and a plurality of absorbent layers, wherein each of the insulation films covers a separate section of the absorbent layer. For example, the insulation films can be arranged separate from each other, wherein each of the insulation film covers one of the stiffening elements. The uncovered section may be arranged between and at a distance from the stiffening elements. Thus, leaked cooling liquid is led away from the stiffening elements and from the parts of the battery that may contact the stiffening elements and towards the absorbent layer, where the cooling liquid is distributed and absorbed. Alternatively, the insulation film may be formed as a single piece with openings in order to let the cooling liquid flow through these openings to the absorbent layer.

The bottom may have an uneven, for example a wavy form, wherein cavities remain between the absorbent layer and the bottom. The bottom may contact the absorbent layer between the cavities. In case the maximum capacity of the absorbent layer for absorbing liquid is reached, excess cooling liquid can be contained in the cavities. Additionally or alternatively, the excess cooling liquid can be contained between the absorbent layer and the insulation film, in particular in the grooves that open towards the absorbent layer, and/or in the retention pond or depression arranged between the stiffening elements that is not completely filled with the absorbent layer and the insulation film. Additionally or alternatively, the space above the absorbent layer and possibly also above the insulation film can be used when the absorbent layer swells upon absorbing the cooling liquid.

At an edge of the bottom, a free space may be present between a lateral side wall of the battery housing and the absorbent layer. This free space may be covered by the insulation film. The lateral side may protrude from the bottom. The free space may form a continuous or discontinuous channel that can border on the at least one absorbent layer or the plurality of absorbent layers. The insulation film may cover the free space at the lateral side at least partly or even completely.

The absorbent layer may be formed of a superabsorbent polymer, which absorbs the cooling liquid. A possible exemplary material of a superabsorbent polymer is poly-acrylic acid sodium salt. Other exemplary materials are a polyacrylamide copolymer, an ethylene maleic anhydride copolymer, cross-linked carboxymethyl cellulose, polyvinyl alcohol copolymers, cross-linked polyethylene oxide, and a starch grafted copolymer of polyacrylonitrile. The material the insulation layer may be formed of can be an electrical insulator that is able to insulate voltages occurring inside the battery, for example voltages of up to 400 V or more.

The battery housing is the housing of a battery module that comprises one or more than one battery cell, or the housing of the complete battery, which may comprise one or more battery modules. In case the housing is the housing of the complete battery, the housing of any of the battery modules may also be a housing according to the invention.

The invention will now be described with reference to exemplary embodiments and with reference to the drawings. The different features of the embodiments can be combined independently of one another, as has already been explained in the individual advantageous examples.

### Brief Description of the Drawings

Features will become apparent to those of ordinary skill in the art by describing exemplary embodiments in detail with reference to the attached drawings in which:
- Fig. 1: illustrates a perspective view of a battery cell according to an embodiment,
- Fig. 2: illustrates a cross-section of a battery cell according to an embodiment,
- Fig. 3: illustrates a perspective view of a battery module according to an embodiment,
- Fig. 4: illustrates a schematic top view of the bottom of a battery housing according to an embodiment,
- Fig. 5: illustrates a schematic cross-sectional view of the bottom of a battery housing according to an embodiment,
- Fig. 6: illustrates a schematic cross-sectional view of the bottom of a battery housing according to an embodiment, and
- Fig. 7: illustrates a schematic cross-sectional view of the bottom of a battery housing according to an embodiment.

### Detailed Description of the Invention

Reference will now be made in detail to embodiments, examples of which are illustrated in the accompanying schematic drawings. Effects and features of the exemplary embodiments, and implementation methods thereof will be described with reference to the accompanying drawings. In the drawings, like reference numerals denote like elements, and redundant descriptions are omitted. As used herein, the term "and/or" includes any and all combinations of one or more of the associated listed items. Further, the use of "may" when describing embodiments of the present invention refers to "one or more embodiments of the present invention." Although the embodiments herein are described with various specific embodiments, it will be obvious for a person skilled in the art to practice the invention with modifications. All such modifications are deemed to be within the scope of the claims.

It will be understood that when a film, a region, or an element is referred to as being "above" or "on" another film, region, or element, it can be directly on the other film, region, or element, or intervening films, regions, or elements may also be present.

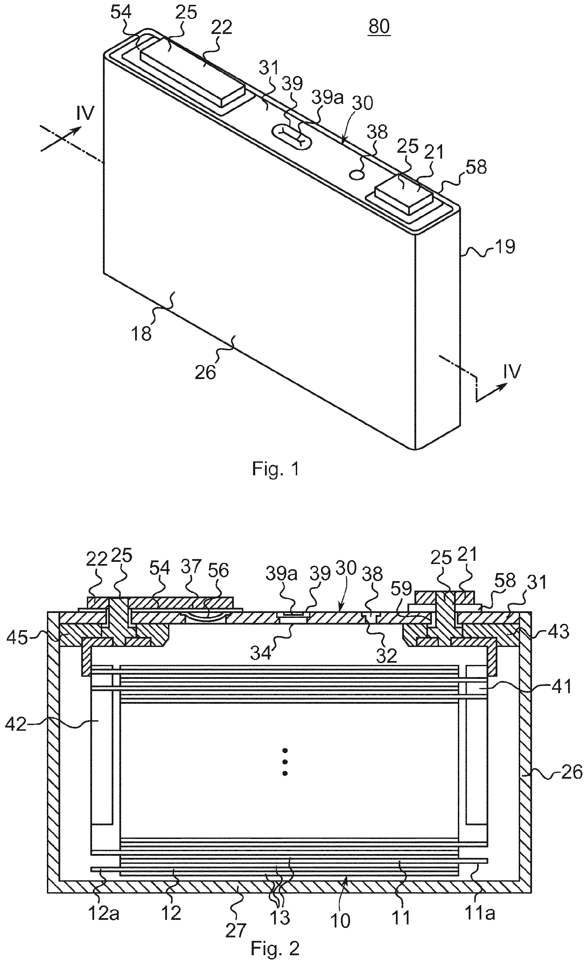

Fig. 1 is a perspective view illustrating a battery cell according to an exemplary embodiment, and Fig. 2 is a cross-sectional view taken along the IV-IV line of Fig. 1.

As shown in Figs. 1 and 2, a battery cell 80 according to an embodiment may include an electrode assembly 10, and a case 26 for accommodating the electrode assembly 10, the case 26 containing an electrolyte. The battery cell 80 may also include a cap assembly 30 for sealing an opening of the case 26. The battery cell 80 will be described as a non-limiting example of a lithium ion secondary battery configured to have a prismatic shape.

The electrode assembly 10 may be formed as a jelly roll type of electrode assembly by spirally winding a positive electrode 11 and a negative electrode 12 with a separator 13 therebetween. The positive electrode 11 and the negative electrode 12 may respectively include coated regions of current collectors formed of a thin metal foil on which an active material may be coated, and may respectively include positive and negative electrode uncoated regions 11a and 12a of the current collectors on which no active material is coated. As a non-limiting example, the coated region of the positive electrode 11 may be formed by coating a base material formed of a metal foil such as an aluminum foil, with an active material such as a transition metal oxide or the like. Also, the coated region of the negative electrode 12 may be formed by coating a base material formed of a metal foil such as a copper or nickel foil, with an active material such as carbon, graphite, or the like.

The positive electrode uncoated region 11a may be formed on one lateral end of the positive electrode 11 in a longitudinal direction of the positive electrode 11, and the negative electrode uncoated region 12a may be formed on one lateral end of the negative electrode 12 in a longitudinal direction of the negative electrode 12. The positive electrode uncoated region 11a and the negative electrode uncoated region 12a may be on sides that are opposite to each other with respect to the coated regions. Further, the separator 13 may include a plurality of separators, which may be spirally wound after the positive electrode 11, the negative electrode 12, and the separator 13 are alternately situated. The present invention is not limited thereto, and the electrode assembly 10 may be configured to have a structure including a plurality of sheets of the positive electrode 11, the separator 13, and the negative electrode 12 that are repeatedly stacked.

The electrode assembly 10 may be accommodated in the case 26 together with an electrolyte solution. The electrolyte solution may be made of a lithium salt such as LiPF6 or LiBF4 with an organic solvent such as EC, PC, DEC, EMC, or EMC. The electrolyte solution may be in a liquid, solid, or gel state. The case 26 may be configured to have a substantially cuboidal shape, and an opening may be formed at one side thereof. The case 26 may be formed of a metal, such as aluminum.

The case 26 may include a bottom surface 27 having a substantially rectangular shape, and may include a pair of first lateral walls that are wide side surfaces 18 and 19, and a pair of second lateral walls that are narrow side surfaces connected vertically to end portions of the bottom surface 27, respectively, to form a space for accommodating the electrode assembly 10. The first lateral walls 18 and 19 may face each other, and the second lateral walls may be positioned to face each other and may be connected to the first lateral walls 18, 19. A length of an edge at which the bottom surface 27 and first lateral walls 18 and 19 are connected to each other may be longer than that of an edge at which the bottom surface 27 and the second lateral wall are connected to each other. Preferably, adjacent first and second lateral walls enclose an angle of about 90°.

The cap assembly 30 may include a cap plate 31 for covering the opening of the case 26 by being bonded to the case 26, and may include a positive terminal 21 (first terminal) and a negative terminal 22 (second terminal), which are externally protruded from the cap plate 31 to be electrically connected to the positive electrode 11 and the negative electrode 12, respectively. The cap plate 31 may be configured to have a shape of a plate that may be extended in one direction, and that may be bonded to the opening of the case 26. The cap plate 31 may include an injection hole 32 and a vent hole 34 that communicate with an interior of the cap assembly 30. The injection hole 32 may be configured to allow injection of the electrolyte solution, and a sealing cap 38 may be mounted thereon or therein. Further, a vent member 39 including a notch 39a, which may be opened due to a predetermined pressure, may be mounted to or in the vent hole 34. The predetermined pressure may be an overpressure with a pre-selected pressure value. For example, the vent member 39 may be an overpressure valve that is configured to open at the predetermined pressure. Alternatively, the vent member 39 may be a sealing element that may be configured to break at the predetermined pressure, for example at the notch 39a.

The positive terminal 21 and the negative terminal 22 may be mounted to protrude upward from the cap plate 31. The positive terminal 21 may be electrically connected to the positive electrode 11 via a current collecting tab 41, and the negative terminal 22 may be electrically connected to the negative electrode 12 via a current collecting tab 42. A terminal connecting member 25 for electrically connecting the positive terminal 21 and the current collecting tab 41 may be mounted between the positive terminal 21 and the current collecting tab 41. The terminal connecting member 25 may be inserted into a hole formed at the positive terminal 21 such that a lower portion thereof may be welded to the current collecting tab 41.

A gasket 59 for sealing may be mounted between the terminal connecting member 25 and the cap plate 31, while being inserted into a hole through which the terminal connecting member 25 may extend. Further, a lower insulating member 43 into which the lower portion of the terminal connecting member 25 may be inserted may be mounted under the cap plate 31. A connecting plate 58 for electrically connecting the positive terminal 21 and the cap plate 31 may be mounted between the positive terminal 21 and the cap plate 31. The terminal connecting member 25 may be inserted into the connecting plate 58. Accordingly, the cap plate 31 and the case 26 may be positively electrified.

Another terminal connecting member 25 for electrically connecting the negative terminal 22 and the current collecting tab 42 may be installed between the negative terminal 22 and the current collecting tab 42. The terminal- connecting member 25 may be inserted into a hole formed at the negative terminal 22, such that an upper portion and a lower portion of the terminal connecting member 25 may be, respectively, welded to the negative terminal 22 and to the current collecting tab 42. A gasket for sealing, which is similar to the gasket 59, may be mounted between the negative terminal 22 and the cap plate 31, while being inserted into the hole through which the terminal connecting member 25 may extend. Further, a lower insulating member 45, which is for insulating the negative terminal 22 and the current collecting tab 42 from the cap plate 31, may be mounted under the cap plate 31.

An upper insulating member 54 for electrically insulating the negative terminal 22 and the cap plate 31 may be mounted between the negative terminal 22 and the cap plate 31. The terminal connecting member 25 may be inserted into a hole formed at the upper insulating member 54. The cap assembly 30 may include a short-circuiting hole 37, and a short-circuiting member 56 that may short-circuit the positive electrode 11 and the negative electrode 12 installed in the short-circuiting hole 37. The short-circuiting member 56 may be between the upper insulating member 54 and the cap plate 31, and the upper insulating member 54 may be configured to have a cutout that may be formed at a position corresponding to the short-circuiting member 56. The short-circuiting member 56 may overlap the negative terminal 22 exposed through the cutout and may be separately located.

Further, the short-circuiting member 56 may be between the negative terminal 22 and the vent hole 34, and may be located closer to the negative terminal 22 than to the vent hole 34. The short-circuiting member 56 may include a convexly curved portion that curves toward the electrode assembly 10, and may include an edge portion that may be formed at an outside of the curved portion and fixed to the cap plate 31. The short-circuiting member 56 may be deformed to cause a short-circuit when an internal pressure of the battery cell 80 rises. In other words, the internal pressure of the battery cell 80 may rise when a gas is generated by an unwanted reaction in the battery cell 80. When the internal pressure of the battery cell 80 is increased to be higher than a level (e.g., a predetermined level), the curved portion may be deformed to be concavely curved toward an opposite direction, thereby causing the short-circuiting member 56 to contact the negative terminal 22 to cause a short-circuit.

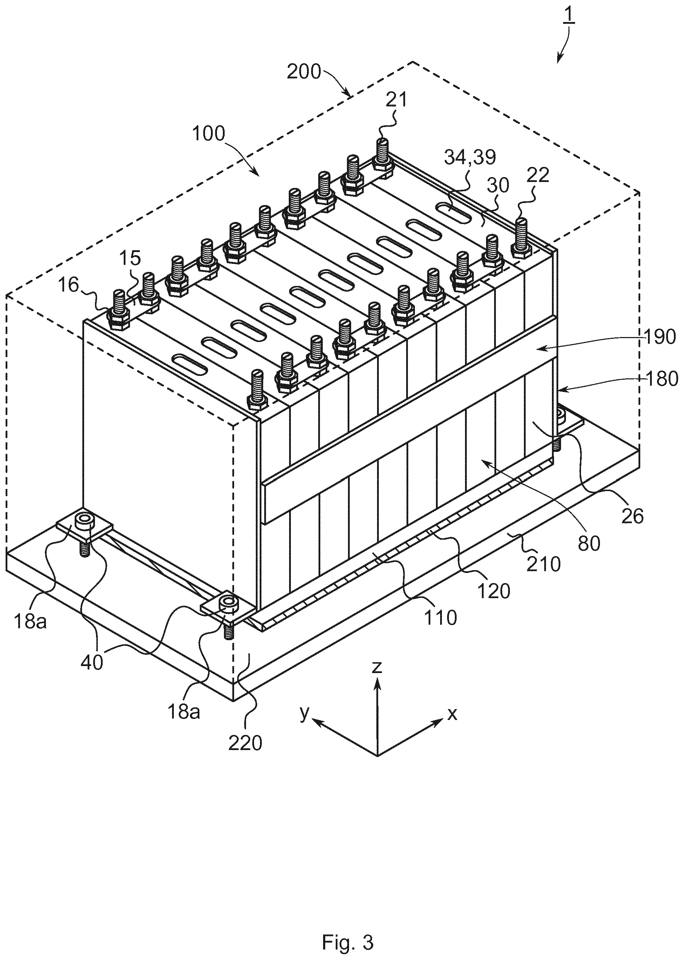

Referring to Fig. 3, another exemplary embodiment of a battery module 100 includes a plurality of battery cells 80 aligned in one direction and a heat exchange member 110 provided adjacent to a bottom surface of the plurality of battery cells 80. A pair of end plates 180 are provided to face wide surfaces of the battery cells 80 at the outside of the battery cells 80, and a connection plate 190 is configured to connect the pair of end plates 180 to each other thereby fixing the plurality of battery cells 80 together. Fastening portions 18a on both sides of the battery module 100 are fastened to a bottom plate 210 by bolts 40. The bottom plate 210 is part of a battery housing 200.

Here, each battery cell 80 is a prismatic (or rectangular) cell, the wide flat surfaces of the cells being stacked together to form the battery module. Further, each battery cell 80 includes a case 26 configured for accommodation of an electrode assembly and an electrolyte. The case 26 is hermetically sealed by a cap assembly 30. The cap assembly 30 is provided with positive and negative electrode terminals 21 and 22 having different polarities, and a vent hole 34. The vent hole 34 is a safety means of the battery cell 80, which acts as a passage through which gas generated in the battery cell 80 is exhausted to the outside of the battery cell 80. The positive and negative electrode terminals 21 and 22 of neighboring battery cells 80 are electrically connected through a bus bar 15, and the bus bar 15 may be fixed by a nut 16 or the like. Hence, the battery module 100 may be used as a power source unit by electrically connecting the plurality of battery cells 80 as one bundle.

Generally, the battery cells 80 generate a large amount of heat while being charged and/or discharged. The generated heat is accumulated in the battery cells 80, thereby accelerating the deterioration of the battery cells 80. Therefore, the battery module 100 further includes a heat exchange member 110, which is provided adjacent to the bottom surface of the battery cells 80 so as to cool down the battery cells 80. In addition, an elastic member 120 made of rubber or other elastic materials may be interposed between the bottom plate 210 and the heat exchange member 110.

The heat exchange member 110 may include a cooling plate provided to have a size corresponding to that of the bottom surface of the plurality of battery cells 80, e.g., the cooling plate may completely overlap the entire bottom surfaces of all the battery cells 80 in the battery module 100. The cooling plate usually includes a passage through which a cooling liquid can move. The cooling liquid performs heat exchange with the battery cells 80 while circulating inside the heat exchange member 110, i.e., inside the cooling plate.

A surface of the bottom plate 210 that faces the battery cells 80 is designated as a bottom 220 of the battery housing 200 in the following. The battery housing 200 with the battery cells 80 form a battery 1, in particular a rechargeable battery 1.

The vent hole 34 and/or the vent member 39 may be consecutively arranged or even be aligned in the direction the battery cells 80 are aligned with each other.

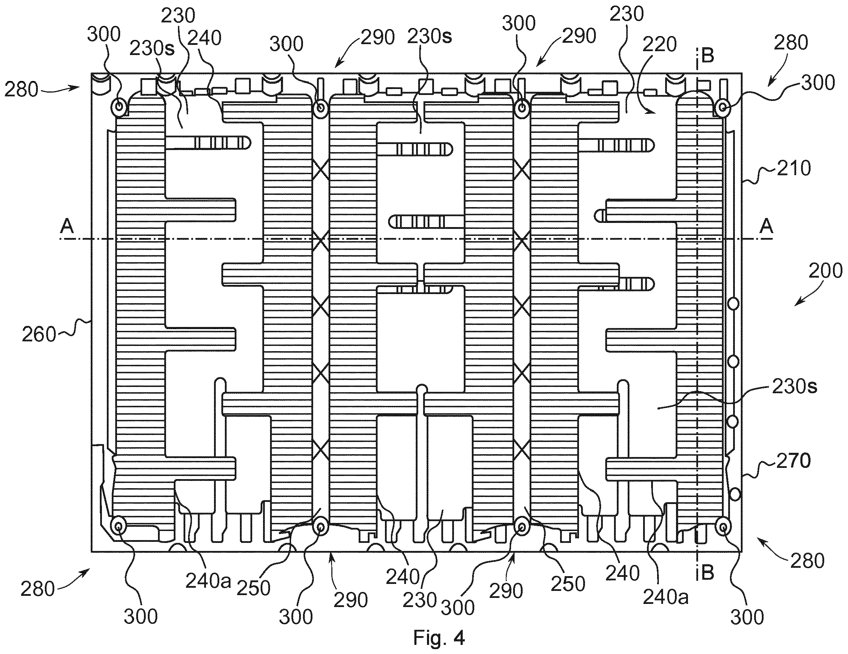

Fig. 4 shows an exemplary embodiment of the bottom plate 210 in a top view, hence of the bottom 220 of the bottom plate 210 of the battery housing 200 in a top view. In case the battery comprising the battery housing 200 is in use, the top view would be along the direction of gravity.

At least one absorbent layer 230 is arranged on the bottom 220. In the exemplary embodiment of Fig. 4, three absorbent layers 230 are arranged on the bottom 220. The at least one absorbent layer 230 may comprise or even consist of a super-absorbent polymer.

Furthermore, at least one insulation film 240 is arranged on the at least one absorbent layer. Hence, the at least one absorbent layer 230 is at least section-wise arranged between the bottom 220 and the at least one insulation film 240.

The insulation film 240 is section-wise fixed to the absorbent layer 230. For example, the absorbent layer 230 and the insulation film 240 can be affixed to each other by gluing or welding. When the absorbent layer 230 and the insulation film 240 are affixed to each other by welding, ultrasonic welding may be a possible welding process. Affixing spots, for example welding spots, are separated from each other such that a region between two affixed sections or spots provides for a fluid-permeable passage between the insulation film 240 and the absorbent layer 230. Hence, a liquid can easily flow between the absorbent layer 230 and the insulation film 240 in order to be absorbed also by a section of the absorbent layer 230 that is covered by, i.e., arranged beneath, the insulation film 240, and not only by a section of the absorbent layer 230 that is not covered by the insulation film 240.

The battery housing 200 may comprise at least one, for example two or even more stiffening elements 250 that are arranged on the bottom 220 of the battery housing 200. The at least one stiffening element 250 may protrude or project from the bottom 220 and may extend away from the bottom 220 in a direction perpendicular to the bottom 220. Each of the two insulation films 240 of the exemplary embodiment of Fig. 1 covers another one of the stiffening elements 250. In particular, the insulation films 240 may be deep-drawn onto the stiffening elements 250 and the absorbent layers 230. One of the absorbent layers 230 may be arranged between the stiffening elements 250. The other two of the three absorbent layers 230 shown in the exemplary embodiment of Fig. 4 are each arranged between one of the stiffening elements 250 and a respective lateral side 260, 270 of the battery housing 200. The lateral sides 260 and 270 may extend parallel to each other and to the stiffening elements 250. Hence, a longitudinal direction of the stiffening elements 250 may extend parallel to the lateral sides 260 and 270. In other words, the stiffening elements 250 may extend in parallel.

The insulation film 240 covering the stiffening elements 250 may not only cover the absorbent layer 230 that is arranged between stiffening elements 250. Rather, these insulation films 240 may also at least section-wise cover the absorbent layers 230 that are arranged on the respective other side of the respective stiffening element 250.

Furthermore, the battery housing 200 may comprise at least one additional insulation film 240a. The at least one additional insulation film 240a covers one of the absorbent layers 230 that is arranged adjacent to one of the lateral sides 260 and 270. The additional insulation film 240a may also cover at least a part of the respective lateral sides 260 and 270.

At least a section 230 of the absorbent layer 230 is not covered by any of the insulation films 240 and 240a, such that this section is designated as an uncovered section 230s in the following.

In at least some of the corners 280 of the bottom 220 and/or at selected or all ends 290 of the stiffening elements 250, positioning elements 300 for positioning and/or affixing at least one battery cell or at least one battery module are provided. The positioning elements 300 are not covered by any of the absorbent layers 230 or any of the insulation films 240 according to the exemplary embodiment of Fig. 4.

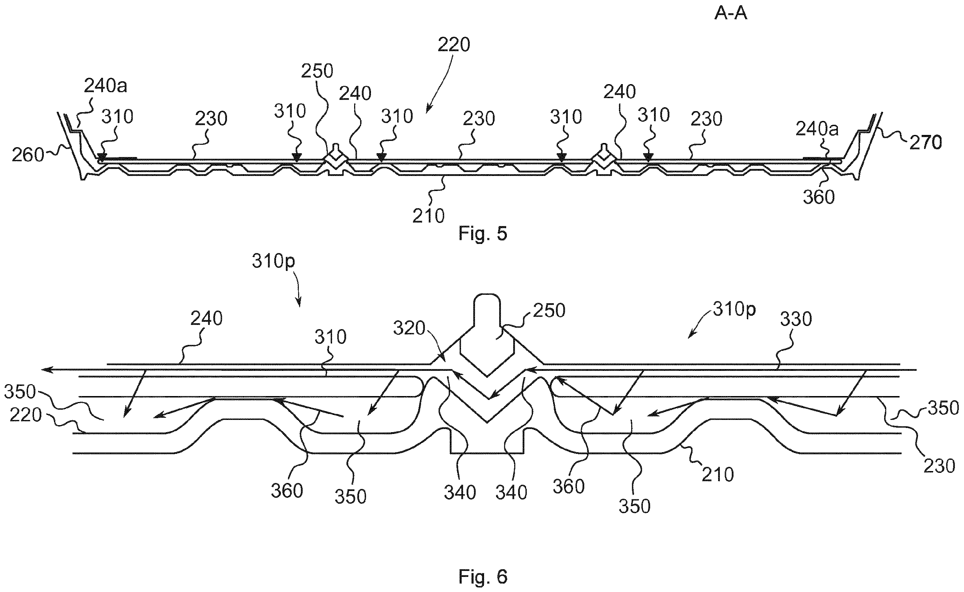

Fig. 5 shows the exemplary embodiment of Fig. 4 in a cross-sectional side view along section A-A of Fig. 4.

The triangles indicate the fixing spots 310, for example welding spots, at which the insulation film 240 and/or the additional insulation films 240a are affixed to a respective one of the absorbent layers 230. In a direction perpendicular to the drawing plane, for example along the at least one stiffening element 250, the fixing spots 310 are arranged at a distance from each other. A fixing seam affixing one of the insulation films 240 and 240a to one of the absorbent layers 230 comprises a plurality of fixing spots 310, wherein the fixing spots 310 of this affixing seam are arranged at a distance from each other such that regions between the fixing spots 310 are present in which the insulation films 240 and 240a are not affixed to the absorbent layer 230. These regions provide for a fluid-permeable passage between the insulation films 240 and 240a and the absorbent layer 230.

Fig. 6 is an enlarged view of the cross-sectional view of Fig. 5, wherein the section is moved perpendicular to section A-A of Fig. 4 to one of the regions that provide for the fluid-permeable passage.

As can be seen in the exemplary embodiment of Fig. 6, the at least one stiffening element 250 can be formed with a continuous opening 320 that may extend perpendicular to the longitudinal direction of the stiffening element 250. Along the longitudinal direction of the stiffening element 250, the continuous opening 320 may be closed at both ends. The continuous opening 320 interconnects two sections of the bottom plate 210 on both sides of the at least one stiffening element 250, such that liquid can flow from one section towards the other section perpendicular to the longitudinal direction of the at least one stiffening element 250.

Furthermore, due to the distances of the fixing spots 310, the region with the fluid-permeable passage 310p between the fixing spots 310 remains such that liquid can flow along a flow path 330 between the absorbent layer 230 and the insulation film 240. The flow path 330 may extend through the continuous opening 320.

Each of the absorbent layers 230 may be arranged at a distance from the continuous opening 320, such that a clear space 340 that is free of any part of the absorbent layers 230 remains between the opening 320 and the respective absorbent layers 230.

The bottom 220 or even the bottom plate 210 may have a wavy shape with protrusions such that cavities 350 between the at least one absorbent layer 230 and the bottom 220 remain. Liquid that cannot be absorbed by the absorbent layer 230 can be stored in the cavities 350. Alternatively or additionally, bypasses 360 of the flow path 330 may extend through the cavities 350. The flow path 330 and the bypasses 360 may merge at least at the continuous opening 320.

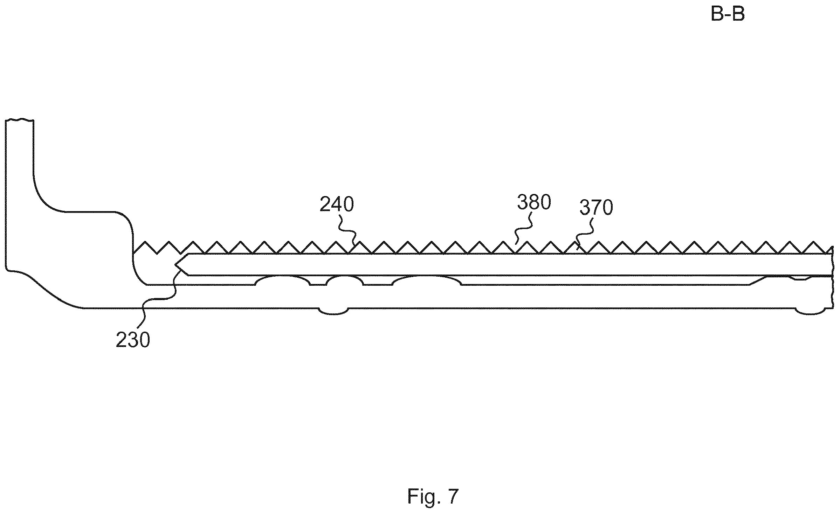

Fig. 7 shows a schematic cross-sectional view of the exemplary embodiment of Fig. 4 along section B-B. In particular, Fig. 7 shows the insulation film 240. The at least one additional insulation film 240a may have a similar shape.

The insulation film 240 may comprise grooves 370 that open towards the absorbent layer 230. The grooves 370 may extend perpendicular to the at least one stiffening element. At least one of the grooves 370 and in particular all of the grooves 370 may be connected to at least one continuous opening of the at least one stiffening element in a fluid-conductive manner, such that fluid flowing between the insulation film 240 and the absorbent layer 230 can easily flow towards the continuous opening or can be easily distributed between the insulation film 240 and the absorbent layer 230.

The depicted cross-section of the insulation film 240 perpendicular to the longitudinal direction of the grooves 370, i.e., parallel to the longitudinal direction of the at least one stiffening element, may have a zigzag shape. Hence, the insulation film 240 not only provides the grooves 370 that open towards the absorbent layer 230, but furthermore, grooves 380 that open away from the absorbent layer 230, for example towards a battery cell of the battery. The grooves 380 opening away from the absorbent layer 230 may lead liquid towards the uncovered region of the absorbent layer 230.

## Claims

1. A battery housing (200) of a battery module (100) including one or more battery cells (80) and/or a battery housing (200) of a battery system that includes one or more battery modules (200),
the battery housing (200) including at least a part of a cooling device using cooling liquids for cooling the battery cells (80),
the battery housing (200) comprising a bottom (220),
an absorbent layer (230) arranged inside the battery housing (200) on the bottom (220) and an electrical insulation film (240) arranged on the absorbent layer (230), wherein the insulation film (240) is sectionwise affixed to the absorbent layer (230) and a region between two affixed sections provides for a fluid-permeable passage (310p) between the insulation film (240) and the absorbent layer (230) and at least a section (230s) of the absorbent layer (230) is not covered by the insulation film (240) and
wherein the absorbent layer (230) and the insulation film (240) are disposed under the cooling device.

2. The battery housing (200) of claim 1, wherein the insulation film (240) comprises grooves (370) opening towards the absorbent layer (230).

3. The battery housing (200) of claim 2, wherein a cross-section of the insulation film (240) perpendicular to the longitudinal direction of the grooves (370) has a zigzag shape.

4. The battery housing (200) of any of claims 1 to 3, wherein the battery housing (200) comprises a stiffening element (250) on the bottom (220), wherein the stiffening element (250) is formed with a continuous opening (320).

5. The battery housing (200) of claim 4, wherein the continuous opening (320) is connected to at least one of the grooves (370) in a fluid-conductive manner.

6. The battery housing (200) of claim 4 or 5, wherein the insulation film (240) covers the stiffening element (250).

7. The battery housing (200) of any of claims 4 to 6, wherein a clear space (340) is present between the continuous opening (320) and the absorbent layer (230).

8. The battery housing (200) of any of claims 4 to 7, wherein the battery housing (200) comprises at least two stiffening elements (250), wherein the absorbent layer (230) is arranged between the two stiffening elements (250).

9. The battery housing (200) of claim 8, wherein the battery housing (200) comprises at least two insulation films (240), wherein one of the insulation films (240) covers one of the stiffening elements (250) and the other one of the insulation films (240) covers the other one of the stiffening elements (250), and wherein a section of the absorbent layer (230) is uncovered by the insulation films (240).

10. A vehicle including a rechargeable battery (100), wherein the battery housing (200) of the rechargeable battery (100) is the battery housing (200) of one of the preceding claims.

## Patentansprüche

1. Batteriegehäuse (200) eines Batteriemoduls (100), umfassend eine oder mehrere Batteriezellen (80) und/oder ein Batteriegehäuse (200) eines Batteriesystems, das ein oder mehrere Batteriemodule (200) umfasst, wobei das Batteriegehäuse (200) mindestens einen Teil einer Kühlvorrichtung umfasst, die Kühlflüssigkeiten zum Kühlen der Batteriezellen (80) verwendet, das Batteriegehäuse (200) einen Boden (220), eine Absorptionsschicht (230), die innerhalb des Batteriegehäuses (200) an dem Boden (220) angeordnet ist, und einen elektrischen Isolierungsfilm (240), der auf der Absorptionsschicht (230) angeordnet ist, umfasst,
wobei der Isolierfilm (240) an der Absorptionsschicht (230) abschnittsweise befestigt ist und eine Region zwischen zwei befestigten Abschnitten einen fluiddurchlässigen Durchgang (310p) zwischen dem Isolierfilm (240) und der Absorptionsschicht (230) bereitstellt und mindestens ein Abschnitt (230s) der Absorptionsschicht (230) durch den Isolierfilm (240) nicht abgedeckt ist, und
wobei die Absorptionsschicht (230) und der Isolierfilm (240) unter der Kühlvorrichtung angeordnet sind.

2. Batteriegehäuse (200) nach Anspruch 1, wobei der Isolierfilm (240) Nuten (370) umfasst, die sich in Richtung der Absorptionsschicht (230) öffnen.

3. Batteriegehäuse (200) nach Anspruch 2, wobei ein Querschnitt des Isolierfilms (240) senkrecht zur Längsrichtung der Nuten (370) eine Zickzackform aufweist.

4. Batteriegehäuse (200) nach einem der Ansprüche 1 bis 3, wobei das Batteriegehäuse (200) ein Aussteifelement (250) an dem Boden (220) umfasst, wobei das Aussteifelement (250) mit einer kontinuierlichen Öffnung (320) gebildet ist.

5. Batteriegehäuse (200) nach Anspruch 4, wobei die kontinuierliche Öffnung (320) mit mindestens einer der Nuten (370) in einer fluidleitfähigen Weise verbunden ist.

6. Batteriegehäuse (200) nach Anspruch 4 oder 5, wobei der Isolierfilm (240) das Aussteifelement (250) abdeckt.

7. Batteriegehäuse (200) nach einem der Ansprüche 4 bis 6, wobei zwischen der kontinuierlichen Öffnung (320) und der Absorptionsschicht (230) ein Freiraum (340) vorhanden ist.

8. Batteriegehäuse (200) nach einem der Ansprüche 4 bis 7, wobei das Batteriegehäuse (200) mindestens zwei Aussteifelemente (250) umfasst, wobei die Absorptionsschicht (230) zwischen den zwei Aussteifelementen (250) angeordnet ist.

9. Batteriegehäuse (200) nach Anspruch 8, wobei das Batteriegehäuse (200) mindestens zwei Isolierfilme (240) umfasst, wobei einer der Isolierfilme (240) eines der Aussteifelemente (250) abdeckt und der andere der Isolierfilme (240) das andere der Aussteifelemente (250) abdeckt, und wobei ein Abschnitt der Absorptionsschicht (230) durch die Isolierfilme (240) nicht abgedeckt ist.

10. Fahrzeug, das eine wiederaufladbare Batterie (100) umfasst, wobei das Batteriegehäuse (200) der wiederaufladbaren Batterie (100) das Batteriegehäuse (200) nach einem der vorstehenden Ansprüche ist.

## Revendications

1. Boîtier de batterie (200) d'un module de batterie (100) comprenant un ou plusieurs éléments de batterie (80) et/ou un boîtier de batterie (200) d'un système de batterie qui comprend un ou plusieurs modules de batterie (200),
le boîtier de batterie (200) comprenant au moins une partie d'un dispositif de refroidissement utilisant des liquides de refroidissement pour refroidir les éléments de batterie (80),
le boîtier de batterie (200) comprenant un fond (220), une couche absorbante (230) agencée à l'intérieur du boîtier de batterie (200) sur le fond (220) et un film d'isolation électrique (240) agencé sur la couche absorbante (230),
dans lequel le film d'isolation (240) est fixé, en section, sur la couche absorbante (230) et une région entre deux sections fixées fournit un passage perméable au fluide (310p) entre le film d'isolation (240) et la couche absorbante (230) et au moins une section (230s) de la couche absorbante (230) n'est pas recouverte par le film d'isolation (240), et
dans lequel la couche absorbante (230) et le film d'isolation (240) sont disposés sous le dispositif de refroidissement.

2. Boîtier de batterie (200) selon la revendication 1, dans lequel le film d'isolation (240) comprend des rainures (370) s'ouvrant vers la couche absorbante (230).

3. Boîtier de batterie (200) selon la revendication 2, dans lequel une section transversale du film d'isolation (240) perpendiculaire à la direction longitudinale des rainures (370) a une forme de zigzag.

4. Boîtier de batterie (200) selon l'une quelconque des revendications 1 à 3, dans lequel le boîtier de batterie (200) comprend un élément raidisseur (250) sur le fond (220), dans lequel l'élément raidisseur (250) est formé avec une ouverture continue (320).

5. Boîtier de batterie (200) selon la revendication 4, dans lequel l'ouverture continue (320) est raccordée à au moins l'une des rainures (370) par conduction de fluide.

6. Boîtier de batterie (200) selon la revendication 4 ou 5, dans lequel le film d'isolation (240) recouvre l'élément raidisseur (250).

7. Boîtier de batterie (200) selon l'une quelconque des revendications 4 à 6, dans lequel un espace libre (340) est présent entre l'ouverture continue (320) et la couche absorbante (230).

8. Boîtier de batterie (200) selon l'une quelconque des revendications 4 à 7, dans lequel le boîtier de batterie (200) comprend au moins deux éléments raidisseurs (250), dans lequel la couche absorbante (230) est agencée entre les deux éléments raidisseurs (250).

9. Boîtier de batterie (200) selon la revendication 8, dans lequel le boîtier de batterie (200) comprend au moins deux films d'isolation (240), dans lequel l'un des films d'isolation (240) recouvre l'un des éléments raidisseurs (250) et l'autre des films d'isolation (240) recouvre l'autre des éléments raidisseurs (250), et dans lequel une section de la couche absorbante (230) est découverte par les films d'isolation (240).

10. Véhicule comprenant une batterie rechargeable (100), dans lequel le boîtier de batterie (200) de la batterie rechargeable (100) est le boîtier de batterie (200) selon l'une des revendications précédentes.
